# FASCICULE DE BREVET EUROPEEN

(11) **EP 3 581 857 B1**
(45) Date de publication et mention de la délivrance du brevet: **28.07.2021**
(21) Numéro de dépôt: 19178642.5
(22) Date de dépôt: 06.06.2019
(51) Int. Cl.: F24F 110/20, F24F 110/70, F24F 13/20, F24F 13/14, F24F 3/044, F24F 11/74, F24F 7/08, F24F 13/04, F24F 13/06, F24F 7/06

(54) **DISPOSITIF DE DISTRIBUTION D'AIR DANS L'ESPACE INTERIEUR D'UNE CONSTRUCTION**
LUFTUMVERTEILUNGSVORRICHTUNG IM INNENRAUM EINES BAUWERKS
DEVICE FOR DISPENSING AIR IN THE INSIDE SPACE OF A BUILDING

(30) Priorité: 11.06.2018 FR 1855061; 11.06.2018 FR 1855060
(43) Date de publication de la demande: 18.12.2019
(73) Titulaire: Ventilairsec, 44220 Coueron (FR)
(72) Inventeur: POTARD, Michèle, 44800 Saint Herblaint (FR); BARDOUL, Claude, 44800 Saint Herblaint (FR); LAFFETER, Clément, 44100 Nantes (FR); ESCAICH, Julien, 44220 Coueron (FR)
(74) Mandataire: Ipsilon

(56) Documents cités:
- EP-A1- 3 051 222
- DE-U1-202013 100 986
- FR-A1- 2 517 756
- FR-A1- 3 053 103
- JP-U- S57 114 335
- JP-U- S57 118 232
- JP-U- S57 132 132

## Description

### DOMAINE DE L'INVENTION

L'invention concerne un dispositif de distribution d'air, notamment pour la distribution d'air dans l'espace intérieur d'une construction, comportant une multiplicité de zones à ventiler.

Elle concerne plus particulièrement un dispositif de distribution d'air comprenant au moins un caisson, comprenant au moins deux entrées d'air et deux bouches de sortie d'air, lesdites entrées d'air étant aptes à être alimentées, l'une, dite entrée d'air extérieur, en air pris à l'extérieur de la construction, l'autre ou une autre, dite entrée d'air intérieur, en air pris à l'intérieur de la construction, et lesdites bouches de sortie d'air étant raccordables chacune par l'intermédiaire d'une gaine à une zone à ventiler.

### ART ANTÉRIEUR

Un dispositif de distribution d'air du type précité est connu comme l'illustre le document DE 20 2013 100986.

La qualité de l'air intérieur, son effet sur la santé humaine et ses coûts économiques et sociaux préoccupent de plus en plus la population. Plusieurs études ont montré qu'il est primordial de ventiler les locaux fermés, en apportant de l'air neuf de l'extérieur, afin d'assurer une ambiance saine.

D'autre part, les bâtiments sont de mieux en mieux isolés et étanches à l'air extérieur. Il en résulte une consommation en chauffage de plus en plus faible. Ceci a permis, au cours des dernières années, la démocratisation des systèmes de chauffage par air.

L'augmentation de l'isolation et de l'étanchéité à l'air des bâtiments a dans le même temps contribué à augmenter le risque de pollution intérieure et ses effets sur la santé des occupants et de l'habitat, puisque la construction ne respire plus, comme cela était le cas pour les bâtiments moins étanches à l'air.

Dans ce cadre, le système le plus classique consiste à traiter la ventilation d'air neuf par un système indépendant du système de climatisation/chauffage. La ventilation d'air neuf est alors traitée avec un système classique type VMC (ventilation mécanique contrôlée) simple flux, comprenant des entrées d'air neuf dans la ou les pièces principales et des bouches d'extraction d'air vicié dans la ou les pièces techniques. Toutefois, cette solution s'avère peu performante. En effet, l'association d'une VMC type simple flux avec un système de climatisation de type gainable peut générer des perturbations aérauliques avec les entrées d'air situées dans chaque pièce principale.

Pour ces raisons, la principale solution proposée à l'heure actuelle consiste à utiliser des systèmes VMC double flux. L'extraction est réalisée comme un simple flux dans les pièces de service et l'insufflation d'air neuf se fait depuis une entrée unique, le plus souvent située sous les combles ou sur le toit, jusque dans les pièces principales, par un réseau de conduits reliés à un motoventilateur. Toutefois, cette solution s'avère présenter un prix de revient important, en raison de la nécessité de multiplier les groupes et les conduits de ventilation. C'est pourquoi, depuis quelques années, on amène aux pièces principales l'air extérieur dans le même réseau de gaines que l'air intérieur.

En pratique, l'air intérieur traité thermiquement et l'air extérieur sont mélangés avant d'être propulsés à travers le réseau de distribution d'air du bâtiment. Il en résulte, du fait de la présence obligatoire d'une chambre de mélange, un dispositif encombrant et l'impossibilité de moduler pièce par pièce les débits d'air extérieur et d'air intérieur en fonction des besoins, sauf à multiplier le nombre de chambres de mélange du dispositif.

### BUT ET RÉSUMÉ

Un but de l'invention est de proposer un dispositif de distribution d'air dont la conception permet de s'exempter de chambre de mélange, sans nuire à la possibilité d'un mélange fin des apports d'air intérieur et extérieur.

À cet effet, l'invention a pour objet un dispositif de distribution d'air, notamment pour la distribution d'air dans l'espace intérieur d'une construction comportant une multiplicité de zones à ventiler, ledit dispositif comprenant au moins un caisson comprenant au moins deux entrées d'air et deux bouches de sortie d'air, lesdites entrées d'air étant aptes à être alimentées, l'une, dite entrée d'air extérieur, en air pris à l'extérieur de la construction, l'autre ou une autre, dite entrée d'air intérieur, en air pris à l'intérieur de la construction, et lesdites bouches de sortie d'air étant raccordables chacune par l'intermédiaire d'une gaine à une zone à ventiler, caractérisé en ce que le caisson est divisé en au moins deux chambres non communicantes à l'intérieur dudit caisson, lesdites chambres étant équipées chacune d'au moins deux sorties d'air et étant munies l'une, dite première chambre, de l'entrée d'air extérieur, l'autre, dite deuxième chambre, de l'entrée d'air intérieur du caisson, et en ce que pour au moins certaines des sorties d'air des première et deuxième chambres, l'une des sorties d'air de la première chambre et l'une des sorties d'air de la deuxième chambre sont ménagées dans une même bouche de sortie d'air du caisson, ces sorties d'air d'une même bouche de sortie d'air étant munies chacune d'un organe d'obturation, lesdits organes d'obturation étant indépendants en déplacement et équipés chacun d'un organe de commande d'entraînement en déplacement dudit organe d'obturation pour le déplacement dudit organe d'obturation entre une position ouverte et une position fermée.

La conception du caisson divisé en au moins deux chambres à l'aide d'un système de cloisonnement permet d'éviter toute communication entre lesdites chambres à l'intérieur du caisson. Cette absence de communication de chambres entre elles, qui se prolonge jusque dans les bouches de sortie du caisson implique que le mélange du contenu des deux chambres s'opère en aval de chaque bouche de sortie du caisson, au niveau de la gaine de distribution.

Ainsi, la gaine de distribution fait à la fois office d'élément de distribution et de mélange d'air extérieur et d'air intérieur, l'air intérieur étant généralement traité thermiquement.

La présence d'organes d'obturation mobiles indépendants en déplacement au niveau de la sortie de chaque chambre permet de réguler de manière précise l'apport en air extérieur et l'apport en air intérieur, pour respecter de manière sûre les contraintes réglementaires en termes d'apport d'air neuf.

Selon un mode de réalisation de l'invention, l'organe d'obturation d'au moins l'une des sorties d'air est une vanne papillon, et l'organe de commande d'entraînement en déplacement dudit organe d'obturation, un moteur. Il en résulte une simplicité de fonctionnement.

Selon un mode de réalisation de l'invention, le dispositif comprend au moins un générateur d'un flux d'air, tel qu'un ventilateur. De préférence, le dispositif comprend au moins deux générateurs d'un flux d'air.

Grâce à la présence d'au moins un générateur d'un flux d'air, le dispositif forme à la fois un dispositif de distribution d'air et de ventilateur, c'est-à-dire de circulation forcée d'air.

Selon un mode de réalisation de l'invention, le ou au moins l'un des générateurs de flux d'air est disposé dans l'une des chambres du caisson. Il en résulte une compacité du dispositif.

Pour améliorer encore la compacité, selon un mode de réalisation, au moins l'un des générateurs de flux d'air est disposé dans l'une des chambres du caisson et l'autre générateur de flux d'air dans l'autre chambre du caisson.

Selon un mode de réalisation de l'invention, le ou au moins l'un des générateurs de flux d'air est disposé dans la première chambre du caisson, cette première chambre renfermant également au moins un filtre disposé entre l'entrée d'air extérieur et le générateur de flux d'air de ladite chambre.

Selon un mode de réalisation de l'invention, le ou au moins l'un des générateurs de flux d'air est disposé dans la deuxième chambre du caisson qui loge également au moins une partie d'un système de chauffage et/ou de refroidissement d'air, cette au moins une partie du système de chauffage et/ou de refroidissement étant située entre le générateur de flux d'air et les sorties d'air de ladite chambre.

En variante ou en complément des modes de réalisation décrits ci-dessus, selon un mode de réalisation de l'invention, le dispositif de distribution d'air comprend au moins un boîtier équipé au moins d'une entrée d'air et d'une sortie d'air et, le ou au moins l'un des générateurs de flux d'air est disposé dans ledit boîtier, la sortie d'air du boîtier étant raccordable à l'une des entrées d'air du caisson.

Selon un mode de réalisation de l'invention, au moins l'une des bouches de sortie d'air s'étend extérieurement en saillie de la paroi du caisson pour former un tronçon de conduit. Le tronçon de conduit est apte à coopérer par emboîtement avec une gaine. Il en résulte un positionnement aisé de la gaine sur la bouche de sortie par simple emboîtement.

Selon un mode de réalisation de l'invention, le dispositif comprend une unité de pilotage configurée pour piloter au moins les organes de commande d'entraînement en déplacement des organes d'obturation des sorties d'air des première et deuxième chambres. Cette unité de pilotage permet un positionnement automatique des organes d'obturation par actionnement automatique des organes de commande d'entraînement en déplacement des organes d'obturation.

Selon un mode de réalisation de l'invention, le dispositif comprend des moyens de fourniture d'entrée de données à ladite unité de pilotage, et l'unité de pilotage est configurée pour piloter au moins les organes de commande d'entraînement en déplacement des organes d'obturation des sorties d'air des première et deuxième chambres en fonction desdites données.

Selon un mode de réalisation de l'invention, les moyens de fourniture d'entrée de données à ladite unité de pilotage comprennent au moins un capteur de température et un capteur de la qualité d'air et l'unité de pilotage est configurée pour, au niveau d'une même bouche de sortie d'air du caisson, piloter l'organe de commande d'entraînement en déplacement de l'organe d'obturation de la sortie d'air de la première chambre au moins en fonction des données fournies par le capteur de qualité d'air et l'organe de commande d'entraînement en déplacement de l'organe d'obturation de la sortie d'air de la deuxième chambre au moins en fonction des données fournies par le capteur de température.

Selon un mode de réalisation de l'invention, au moins l'une des entrées d'air du caisson est équipée d'un organe d'obturation et d'un organe de commande en déplacement dudit organe d'obturation entre une position fermée et une position ouverte. Il en résulte des possibilités de réglage supplémentaires du dispositif de distribution d'air.

### BRÈVE DESCRIPTION DES FIGURES

L'invention sera bien comprise à la lecture de la description suivante d'exemples de réalisation, en référence aux dessins annexés dans lesquels :
- La figure 1 représente une vue schématique d'une construction équipée d'un dispositif de distribution d'air conforme à l'invention.
- La figure 2 représente une vue schématique d'un premier mode de réalisation d'un dispositif de distribution d'air conforme à l'invention.
- La figure 3 représente une vue schématique d'un deuxième mode de réalisation d'un dispositif de distribution d'air conforme à l'invention.

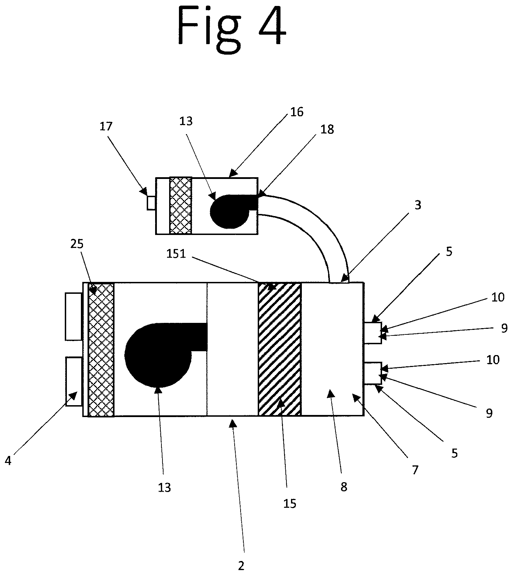

- La figure 4 représente une vue schématique d'un troisième mode de réalisation d'un dispositif de distribution d'air conforme à l'invention.
- La figure 5 représente une vue schématique d'un quatrième mode de réalisation d'un dispositif de distribution d'air conforme à l'invention.

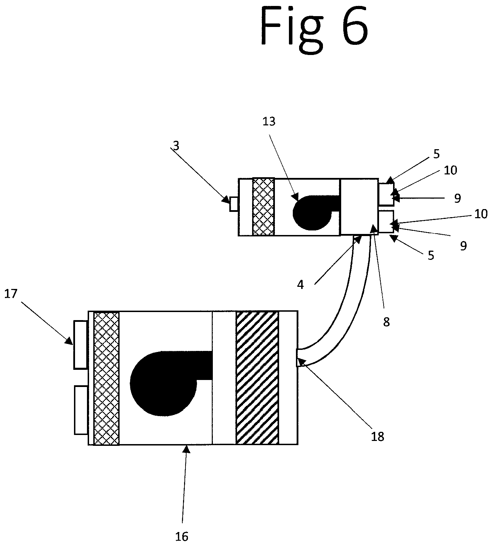

- La figure 6 représente une vue d'ensemble du dispositif de distribution d'air conforme au mode de réalisation de la figure 3.

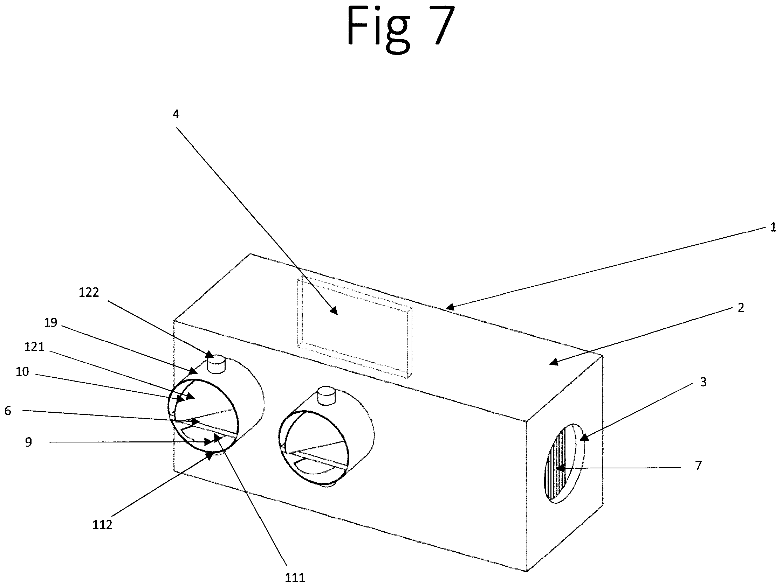

- La figure 7 représente une vue en perspective du caisson du dispositif de distribution d'air de la figure 3.

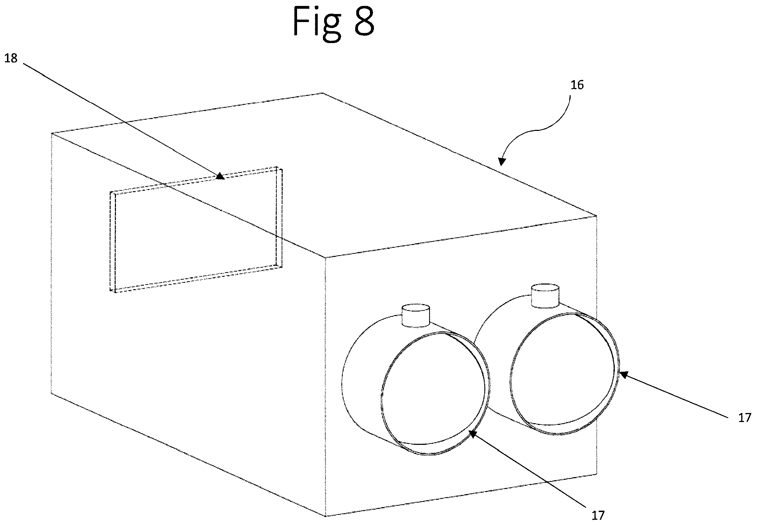

- La figure 8 représente une vue en perspective du boîtier du dispositif de distribution d'air de la figure 3.

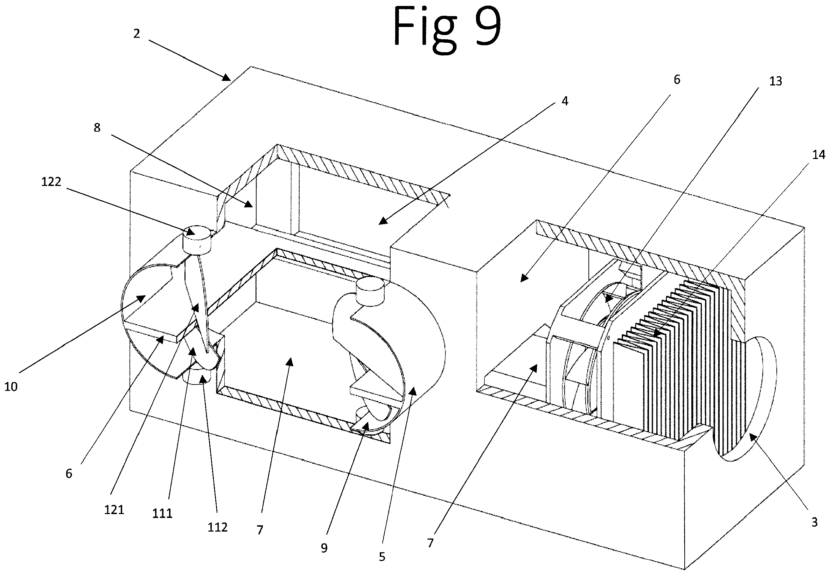

- La figure 9 représente une vue partielle en perspective du caisson du dispositif de distribution d'air de la figure 3, certaines parties ayant été enlevées pour mieux visualiser l'intérieur du caisson.
- La figure 10 représente une vue partielle en perspective d'une moitié du caisson du dispositif de distribution d'air de la figure 3.

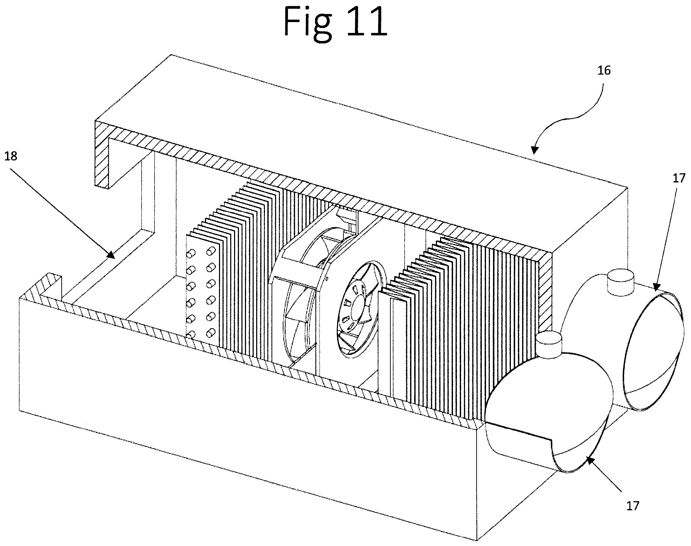

- La figure 11 représente une vue partielle en perspective du caisson du dispositif de distribution d'air tel que représenté à la figure 3, certaines parties ayant été enlevées pour mieux visualiser l'intérieur du caisson.

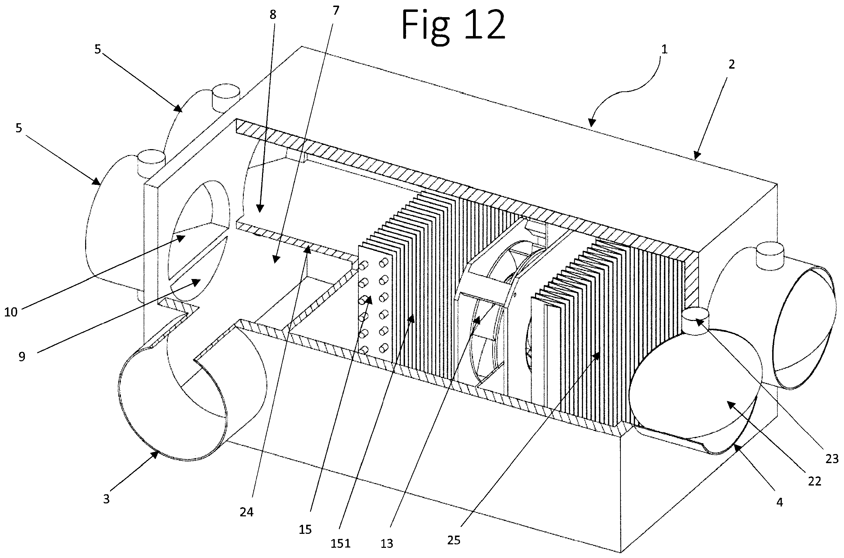

- La figure 12 représente une vue partielle en perspective du caisson du dispositif de distribution d'air tel que représenté à la figure 4, certaines parties ayant été enlevées pour mieux visualiser l'intérieur du caisson.
- La figure 13 représente une vue partielle en perspective du caisson du dispositif de distribution d'air tel que représenté à la figure 2, certaines parties ayant été enlevées pour mieux visualiser l'intérieur du caisson.

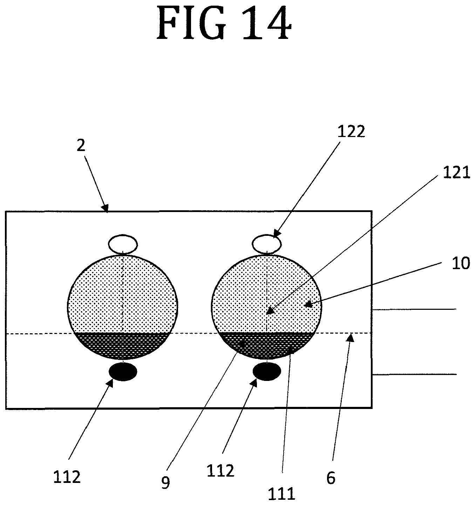

- La figure 14 représente une vue schématique de face d'un caisson équipé de deux bouches de sortie d'air.

### DESCRIPTION DÉTAILLÉE

Comme mentionné ci-dessus, l'invention a pour objet un dispositif 1 de distribution d'air apte à permettre, à l'état couplé à un dispositif de ventilation préexistant ou à l'état équipé d'au moins un générateur 13 de flux d'air, d'introduire dans l'espace intérieur d'une construction 30 comportant une multiplicité de zones 31 à ventiler, un flux d'air mettant l'espace intérieur de la construction en légère surpression par rapport à l'atmosphère extérieure.

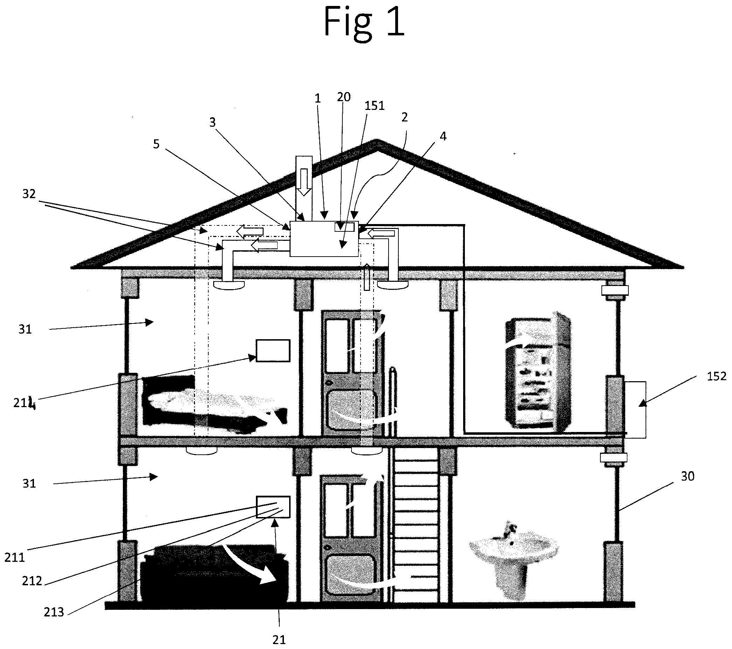

Ce dispositif 1 de distribution d'air peut être installé dans les combles de la construction 30, comme illustré à la figure 1.

Ce dispositif 1 comprend un caisson 2 comprenant au moins deux entrées d'air et au moins deux bouches 5 de sortie d'air. Le nombre de bouches de sortie d'air est fonction du nombre de zones 31 de la construction à ventiler, chaque bouche 31 de sortie d'air étant raccordable par l'intermédiaire d'une gaine 32 à la zone 31 à ventiler.

Cette gaine 32 est généralement pourvue, à son extrémité, d'un diffuseur d'air comme représenté.

Dans les exemples représentés, le caisson 2 est équipé à chaque fois de deux bouches 5 de sortie d'air. Le caisson 2 est délimité par une paroi 24 et chaque bouche de sortie d'air s'étend extérieurement en saillie de la paroi 24 du caisson pour former un tronçon 19 de conduit. Il en résulte une facilité de montage à emboîtement de la gaine 32 sur la bouche 5 de sortie d'air par emmanchement de la gaine 32 sur la bouche 5 de sortie d'air.

Les entrées d'air du caisson 2 comprennent quant à elles une entrée d'air extérieur 3 apte à être alimentée en air pris à l'extérieur de la construction 30.

À cet effet, dans l'exemple représenté, une gaine relie une ouverture ménagée dans la toiture de la construction à l'entrée 3 d'air extérieur du caisson.

Les entrées d'air du caisson 2 comprennent encore une ou plusieurs entrées 4 d'air intérieur. Dans l'exemple représenté, le caisson 2 est à chaque fois équipé de deux entrées 4 d'air intérieur aptes à être alimentées chacune en air pris à l'intérieur de la construction, dans une zone différente de la construction, comme l'illustre la figure 1 où une première entrée 4 d'air intérieur est reliée par une gaine à une zone de la construction prise au niveau de l'étage de la construction, tandis que la deuxième entrée 4 d'air intérieur est reliée par une gaine à une zone de la construction prise au niveau du rez-de-chaussée de la construction.

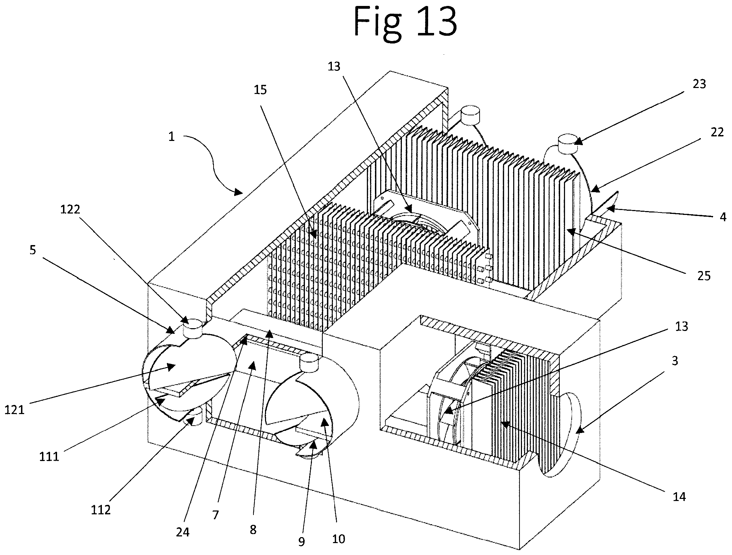

Le caisson 2 se présente sous forme d'un corps creux, généralement polygonal, représenté ici de forme générale parallélépipédique dans les figures autres que la figure 13. Ce caisson 2, qui comprend au moins un corps et un couvercle, délimite une enceinte.

Il doit être noté que chaque entrée 4 d'air intérieur peut également équipée d'un organe 22 d'obturation et d'un organe 23 de commande en déplacement dudit organe 22 d'obturation, entre une position fermée et une position ouverte.

Le caisson 2 est, à l'aide d'un système 6 de cloisonnement divisé en deux chambres non communicantes à l'intérieur du caisson 2. Ainsi, tout transfert d'air d'une chambre à une autre est, à l'intérieur du caisson 2, empêché du fait du système 6 de cloisonnement.

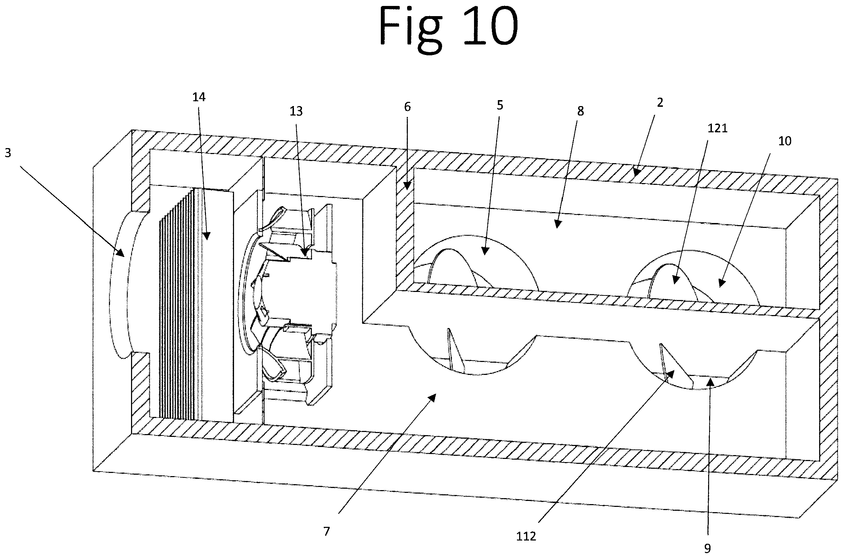

Ce système 6 de cloisonnement est ici formé par une paroi en L plus particulièrement visible à la figure 10. L'une des branches du L de cette paroi divise en deux chaque bouche 5 de sortie d'air du caisson. Cette paroi est en outre disposée à l'intérieur du caisson 2, de sorte que l'une des chambres, appelée première chambre 7 est équipée de l'entrée 3 d'air extérieur du caisson et l'autre chambre, appelée deuxième chambre 8 est équipée de la ou des entrées 4 d'air intérieur du caisson.

Chaque chambre du caisson est équipée d'au moins deux sorties d'air. Généralement, le nombre de sorties d'air de chaque chambre est égal au nombre de bouches 5 de sortie d'air du caisson.

Le dispositif comprenant ici deux bouches 5 de sortie d'air, il est prévu deux sorties d'air par chambre. Les sorties d'air de la première chambre 7 sont représentées en 9, tandis que les sorties d'air de la deuxième chambre 8 sont représentées en 10. À chaque fois, une sortie 9 d'air de la première chambre 7 et une sortie 10 d'air de la deuxième chambre 8 sont ménagées dans une même bouche 5 de sortie d'air.

Ces sorties d'air sont, au niveau de la bouche 5 de sortie d'air, séparées l'une de l'autre par le système de cloisonnement du caisson qui sert également à la délimitation des chambres 7 et 8. Ainsi, lorsqu'une gaine est rapportée sur la bouche 5 de sortie d'air, elle peut être alimentée à la fois en air issu de la première chambre 7 et en air issu de la deuxième chambre 8 du caisson 2. Le mélange entre les flux d'air s'opère dans la gaine 32.

Chaque sortie 9, 10 d'une même bouche 5 de sortie d'air est munie d'un organe d'obturation. Ainsi, la sortie 9 d'air de la première chambre 7 est munie d'un organe 111 d'obturation, tandis que la sortie d'air de la deuxième chambre 8 est munie d'un organe 121 d'obturation.

Grâce à ces organes d'obturation, la gaine 32 rapportée sur la bouche 5 de sortie d'air peut être alimentée uniquement en air issu de la première chambre ou uniquement en air issu de la deuxième chambre.

Ces organes 111 et 121 d'obturation sont des organes d'obturation indépendants en déplacement et chaque organe d'obturation est équipé de son organe de commande d'entraînement en déplacement. Ainsi, l'organe 111 d'obturation de la sortie 9 d'air de la première chambre 7 est une vanne papillon et l'organe de commande d'entraînement en déplacement représenté en 112 aux figures est un moteur.

De même, l'organe 121 d'obturation de la sortie 10 d'air de la deuxième chambre 8 est une vanne papillon dont l'organe de commande d'entraînement en déplacement représenté en 122 aux figures est un moteur.

Les moteurs sont disposés de manière diamétralement opposée, sur le tronçon 19 de conduit en saillie de la paroi, et les vannes papillon pivotent autour d'axes alignés comme illustré à la figure 13.

Chaque organe d'obturation affecte la forme d'une portion de disque pivotant autour d'un arbre.

L'arbre s'étend entre le système de cloisonnement du caisson et l'arbre moteur, de manière coaxiale audit arbre moteur, cet arbre pivot formant un prolongement de l'arbre moteur.

Ainsi, le déplacement de chaque organe d'obturation entre la position fermée et la position ouverte s'opère par simple entraînement en rotation de l'arbre moteur. Du fait de la présence d'un organe d'obturation par sortie, il en résulte la possibilité d'alimenter la gaine raccordable sur la bouche 5 de soufflage d'air, soit uniquement à partir de l'air issu de la première chambre, soit uniquement à partir de l'air issu de la deuxième chambre, soit à partir d'un air issu des deux chambres, le mélange s'opérant dans la gaine.

Pour permettre, au niveau de chaque chambre, un entraînement de l'air depuis la ou les entrées d'air en direction des bouches d'air, le dispositif 1 de distribution d'air comprend au moins un générateur 13 de flux d'air réalisé ici sous forme d'un ventilateur. En effet, bien que le dispositif 1 de distribution d'air puisse être utilisé en lien avec des unités d'alimentation en air pré équipant la construction, de préférence, le dispositif 1 de distribution d'air forme également un dispositif de ventilation.

Chaque générateur 13 de flux d'air est, quel que soit son emplacement dans le dispositif, configuré pour générer un flux d'air en écoulement depuis la ou les entrées d'air de l'une des chambres vers la ou les sorties d'air de ladite chambre.

Ces générateurs d'air permettent donc d'introduire dans l'espace intérieur de la construction un flux d'air mettant généralement l'espace intérieur de la construction en légère surpression par rapport à l'atmosphère extérieure.

Les emplacements des générateurs d'air peuvent être divers et variés, selon la configuration souhaitée pour le dispositif 1 de distribution d'air.

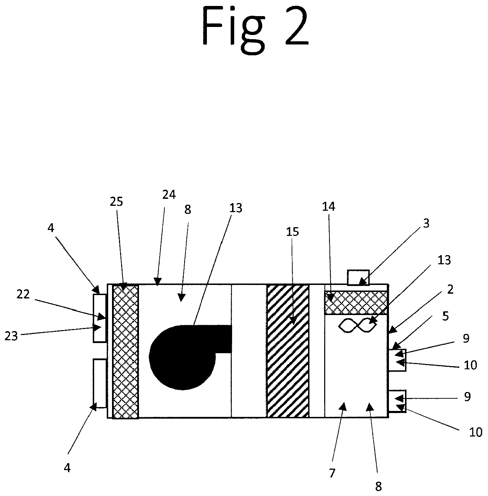

De préférence, le ou au moins l'un des générateurs 13 de flux d'air est disposé dans l'une des chambres du caisson 2. Ainsi, dans l'exemple représenté à la figure 2, l'un des générateurs 13 de flux d'air est disposé dans l'une des chambres du caisson 2, tandis que l'autre générateur 13 de flux d'air est disposé dans l'autre des chambres du caisson 2.

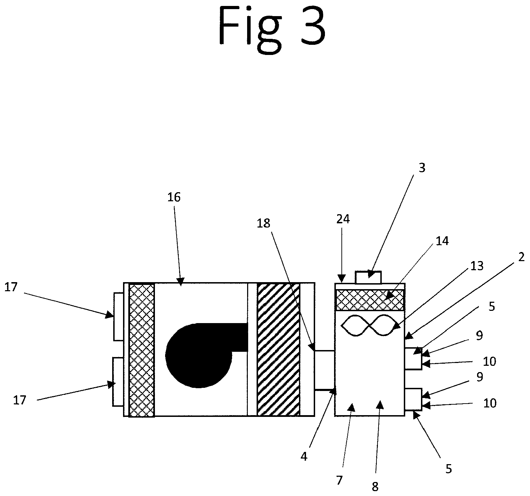

Dans l'exemple représenté à la figure 3, le dispositif 1 de distribution d'air comprend un boîtier 16. L'un des générateurs 13 d'air est disposé dans la première chambre du caisson, tandis que l'autre générateur 13 d'air est disposé dans le boîtier 16. Ce boîtier 16 est équipé au moins d'une entrée 17 d'air et d'une sortie 18 d'air, ladite sortie 18 d'air étant raccordable à l'une des entrées d'air du caisson 2.

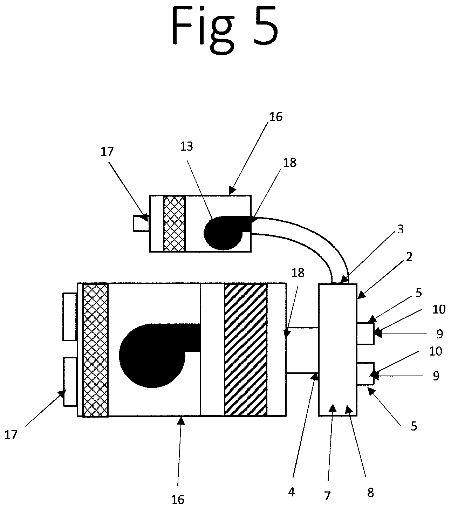

Enfin, dans l'exemple représenté à la figure 5, le dispositif 1 de distribution d'air comprend deux boîtiers 16. Chaque boîtier 16 est équipé d'au moins une entrée 17 d'air et d'une sortie d'air 18. Les générateurs d'air sont disposés chacun dans un boîtier 16.La sortie 18 d'air de l'un des boîtiers 16 est raccordable à l'entrée d'air intérieure du caisson 2, tandis que la sortie 18 d'air de l'autre boîtier est raccordable à l'entrée d'air extérieur du caisson 2.

Indépendamment du mode de réalisation retenu, lorsque l'un des générateurs 13 de flux d'air est disposé dans la première chambre 7 du caisson, cette première chambre 7 renferme également au moins un filtre 14 disposé entre l'entrée 3 d'air extérieur et le générateur 13 de flux d'air de ladite chambre 7.

De même, lorsque l'un des générateurs 13 de flux d'air est disposé dans la deuxième chambre 8 du caisson 2, celle-ci loge également au moins une partie d'un système 15 de chauffage et/ou de refroidissement d'air. Cette au moins une partie du système 15 de chauffage et/ou de refroidissement logée à l'intérieur de ladite chambre est située entre le générateur 13 de flux d'air et les sorties 10 d'air de ladite chambre 8.

Cette deuxième chambre 8 du caisson 2 peut également loger un filtre 25 disposé entre le générateur 13 de flux d'air et la ou les entrées 4 d'air intérieur de ladite deuxième chambre 8.

Lorsque l'entrée 3 d'air extérieur du caisson 2 est reliée à la sortie d'un boîtier 16 logeant un générateur de flux d'air, ce boîtier 16 renferme également un filtre disposé entre l'entrée d'air 17 du boîtier 16 et le générateur 13 de flux d'air.

Lorsque l'entrée d'air intérieur du caisson 2 est reliée à la sortie d'un boîtier 16 logeant un générateur de flux d'air, le boîtier renferme également un système de chauffage et/ou de refroidissement de l'air disposé entre le générateur de flux d'air et la sortie 18 d'air du boîtier 16 et éventuellement un filtre disposé entre la ou les entrées d'air 17 du boîtier 16 et le générateur 13 de flux d'air.

Pour parfaire l'ensemble, le dispositif 1 de distribution d'air comprend une unité 20 de pilotage configurée pour piloter au moins les organes 112, 122 de commande d'entraînement en déplacement des organes 111, 121 d'obturation des sorties 9, 10 d'air des première et deuxième chambres 7 et 8.

Cette unité 20 de pilotage comprend des moyens de traitement électronique et/ou informatique de données, tels qu'un processeur associé à une mémoire de travail. Lorsque l'expression "l'unité de pilotage est configurée pour" est utilisée, cela signifie que le processeur comprend des instructions pour réaliser l'action. Cette unité 20 de pilotage est donc également configurée pour piloter les générateurs de flux d'air, et en particulier piloter le circuit électronique de puissance qui alimente en énergie électrique chaque générateur de flux d'air. Cette unité de pilotage est également configurée pour piloter le système 15 de chauffage et/ou de refroidissement. Ce système 15 de chauffage et/ou de refroidissement peut être formé par une simple résistance électrique. Dans ce cas, le système 15 de chauffage et/ou de refroidissement peut être entièrement disposé dans le caisson 2 et l'unité de pilotage est configurée pour piloter le circuit électronique et/ou électronique de puissance qui alimente en énergie électrique la résistance électrique. Ce système 15 de chauffage et/ou de refroidissement peut comprendre, au niveau de la partie 151 du système 15 de chauffage et/ou de refroidissement intégré au dispositif 1 de distribution un échangeur de chaleur air/air ou air/eau. Cet échangeur de chaleur, dit intérieur, peut être relié, comme dans l'exemple représenté à la figure 1, à un échangeur 152 de chaleur déporté dit extérieur par une liaison de fluide caloporteur, les deux échangeurs de chaleur jouant l'un, le rôle d'un évaporateur, l'autre, le rôle du condenseur.

Dans ce cas, l'échangeur de chaleur déporté joue le rôle de condenseur en été lorsque le dispositif est utilisé en mode climatiseur et d'évaporateur en hiver lorsque le dispositif est utilisé en mode pompe à chaleur, pour le chauffage de la construction.

Il est également prévu des moyens de circulation forcée d'air, tels qu'un ventilateur, permettant de faire circuler l'air extérieur à travers l'échangeur de chaleur déporté et un compresseur permettant de faire circuler le fluide caloporteur dans la liaison fluidique entre les échangeurs de chaleur intérieur et extérieur.

L'échangeur de chaleur intérieur joue le rôle inverse de l'échangeur extérieur, c'est-à-dire le rôle d'un évaporateur en mode climatisation du dispositif et d'un condenseur en mode chauffage.

Dans le cas où le dispositif comprend, au niveau d'au moins l'une des entrées d'air du caisson, un organe 22 d'obturation et un organe 23 de commande d'entraînement en déplacement dudit organe 22 d'obturation, l'unité de pilotage est configurée pour piloter l'organe 23 de commande en déplacement.

Pour permettre un tel pilotage, le dispositif 1 de distribution d'air comprend des moyens 21 de fourniture d'entrée de données à ladite unité 20 de pilotage, et l'unité 20 de pilotage est configurée pour piloter au moins les organes 112, 122 de commande d'entraînement en déplacement des organes 111, 121 d'obturation des sorties 9 et 10 d'air des première et deuxième chambres 7 et 8 en fonction desdites données, mais également le générateur de flux d'air et le système de chauffage et/ou de refroidissement et éventuellement les organes de commande d'entraînement en déplacement des organes d'obturation des entrées d'air lorsqu'ils sont présents au moins en fonction desdites données.

Les moyens 21 de fourniture d'entrée de données peuvent affecter un grand nombre de formes. Ces moyens 21 de fourniture d'entrée de données à ladite unité 20 de pilotage comprennent au moins un capteur de température 211 et un capteur de la qualité d'air 214 et l'unité de pilotage est configurée pour, au niveau d'une même bouche 5 de sortie d'air du caisson, piloter l'organe 112 de commande d'entraînement en déplacement de l'organe 111 d'obturation de la sortie 9 d'air de la première chambre 7 au moins en fonction des données fournies par le capteur 214 de qualité d'air et l'organe 122 de commande d'entraînement en déplacement de l'organe 121 d'obturation de la sortie 10 d'air de la deuxième chambre 8 au moins en fonction des données fournies par le capteur 211 de température.

Le capteur de qualité d'air peut être un capteur de CO₂, un capteur d'humidité ou autre. Les signaux générés par lesdits capteurs sont aptes à être transmis à l'unité de pilotage par liaison filaire ou sans fil. Les moyens de fourniture d'entrée de données peuvent encore comprendre une interface homme/machine et/ou une mémoire de stockage de données prédéfinies, configurées pour adresser à l'unité de pilotage une consigne de température et une consigne de qualité de l'air par zone à ventiler ou des données aptes à permettre le calcul desdites consignes.

L'interface homme/machine peut être formée par une télécommande, un clavier, un thermostat 212, un programmateur 213 ou autre.

L'unité de pilotage est configurée pour, à partir des données mesurées par les capteurs et les consignes de température et de qualité d'air reçues ou mémorisées ou calculées, générer des signaux de commande :
- des organes de commande d'entraînement en déplacement des organes d'obturation des sorties d'air du caisson,
- des générateurs de flux d'air,
- du système de chauffage et/ou de refroidissement, et éventuellement,
- des organes de commande d'entraînement en déplacement des organes d'obturation des entrées d'air du caisson lorsqu'ils sont présents.

Grâce à cette possibilité offerte d'agir sur un grand nombre d'actionneurs, il en résulte un pilotage fin de l'air circulant dans la construction.

## Revendications

1. Dispositif (1) de distribution d'air, notamment pour la distribution d'air dans l'espace intérieur d'une construction (30) comportant une multiplicité de zones (31) à ventiler, ledit dispositif (1) comprenant au moins un caisson (2) comprenant au moins deux entrées (3, 4) d'air et deux bouches (5) de sortie d'air, lesdites entrées (3, 4) d'air étant aptes à être alimentées, l'une (3), dite entrée (3) d'air extérieur, en air pris à l'extérieur de la construction (30), l'autre (4) ou une autre, dite entrée (4) d'air intérieur, en air pris à l'intérieur de la construction (30), et lesdites bouches (5) de sortie d'air étant raccordables chacune par l'intermédiaire d'une gaine (32) à une zone (31) à ventiler, où le caisson (2) est divisé en au moins deux chambres (7, 8) non communicantes à l'intérieur dudit caisson (2), lesdites chambres (7 ; 8) étant équipées chacune d'au moins deux sorties (9 ; 10) d'air et étant munies l'une (7), dite première chambre (7), de l'entrée (3) d'air extérieur, l'autre (8), dite deuxième chambre (8), de l'entrée (4) d'air intérieur du caisson (2),
**caractérisé en ce que** pour au moins certaines des sorties (9 ; 10) d'air des première et deuxième chambres (7 ; 8), l'une des sorties (9) d'air de la première chambre (7) et l'une des sorties (10) d'air de la deuxième chambre (8) sont ménagées dans une même bouche (5) de sortie d'air du caisson, ces sorties d'air d'une même bouche de sortie d'air étant munies chacune d'un organe (111, 121) d'obturation, lesdits organes (111, 121) d'obturation étant indépendants en déplacement et équipés chacun d'un organe (112, 122) de commande d'entraînement en déplacement dudit organe (111, 121) d'obturation pour le déplacement dudit organe (111, 121) d'obturation entre une position ouverte et une position fermée.

2. Dispositif (1) de distribution d'air selon la revendication 1, **caractérisé en ce que** l'organe (111, 121) d'obturation d'au moins l'une des sorties (9, 10) d'air est une vanne papillon, et l'organe (112, 122) de commande d'entraînement en déplacement dudit organe (111, 121) d'obturation, un moteur.

3. Dispositif (1) de distribution d'air selon l'une des revendications 1 ou 2, **caractérisé en ce qu'**il comprend au moins, de préférence au moins deux générateurs (13) d'un flux d'air, tels qu'un ventilateur.

4. Dispositif (1) de distribution d'air selon la revendication 3, **caractérisé en ce que** le ou au moins l'un des générateurs (13) de flux d'air est disposé dans l'une des chambres (7, 8) du caisson (2).

5. Dispositif (1) de distribution d'air selon l'une des revendications 3 ou 4, **caractérisé en ce que** le ou au moins l'un des générateurs (13) de flux d'air est disposé dans la première chambre (7) du caisson (3), cette première chambre (7) renfermant également au moins un filtre (14) disposé entre l'entrée (3) d'air extérieur et le générateur (13) de flux d'air de ladite chambre (7).

6. Dispositif (1) de distribution d'air selon l'une des revendications 3 à 5, **caractérisé en ce que** le ou au moins l'un des générateurs (13) de flux d'air est disposé dans la deuxième chambre (8) du caisson (3) qui loge également au moins une partie d'un système (15) de chauffage et/ou de refroidissement d'air, cette au moins une partie du système (15) de chauffage et/ou de refroidissement étant située entre le générateur (13) de flux d'air et les sorties (10) d'air de ladite chambre (8).

7. Dispositif (1) de distribution d'air selon l'une des revendications 3 à 6, **caractérisé en ce que** le dispositif (7) de distribution d'air comprend au moins un boîtier (16) équipé au moins d'une entrée (17) d'air et d'une sortie (18) d'air, **en ce que** le ou au moins l'un des générateurs (13) de flux d'air est disposé dans ledit boîtier (16) et **en ce que** la sortie (18) d'air du boîtier (16) est raccordable à l'une des entrées (3, 4) d'air du caisson (2).

8. Dispositif (1) de distribution d'air selon l'une des revendications 1 à 7, **caractérisé en ce qu'**au moins l'une des bouches (5) de sortie d'air s'étend extérieurement en saillie de la paroi (24) du caisson (2) pour former un tronçon (19) de conduit.

9. Dispositif (1) de distribution d'air selon l'une des revendications 1 à 8, **caractérisé en ce qu'**il comprend une unité (20) de pilotage configurée pour piloter au moins les organes (112, 122) de commande d'entraînement en déplacement des organes (111, 121) d'obturation des sorties (9, 10) d'air des première et deuxième chambres (7, 8).

10. Dispositif (1) de distribution d'air selon la revendication 9, **caractérisé en ce qu'**il comprend des moyens (21) de fourniture d'entrée de données à ladite unité (20) de pilotage, et **en ce que** l'unité (20) de pilotage est configurée pour piloter au moins les organes (112, 122) de commande d'entraînement en déplacement des organes (111, 121) d'obturation des sorties (9, 10) d'air des première et deuxième chambres (7, 8) en fonction desdites données.

11. Dispositif (1) de distribution d'air selon la revendication 10, **caractérisé en ce que** les moyens (21) de fourniture d'entrée de données à ladite unité (20) de pilotage comprennent au moins un capteur de température (211) et un capteur de la qualité d'air (214) et **en ce que** l'unité (20) de pilotage est configurée pour, au niveau d'une même bouche (5) de sortie d'air du caisson, piloter l'organe (112) de commande d'entraînement en déplacement de l'organe (111) d'obturation de la sortie (9) d'air de la première chambre (7) au moins en fonction des données fournies par le capteur de qualité d'air (214) et l'organe (122) de commande d'entraînement en déplacement de l'organe (121) d'obturation de la sortie (10) d'air de la deuxième chambre (8) au moins en fonction des données fournies par le capteur de température (211).

12. Dispositif (1) de distribution d'air selon l'une des revendications 1 à 11, **caractérisé en ce qu'**au moins l'une des entrées (3, 4) d'air du caisson (2) est équipée d'un organe (22) d'obturation et d'un organe (23) de commande en déplacement dudit organe (22) d'obturation entre une position fermée et une position ouverte.

## Patentansprüche

1. Luftumverteilungsvorrichtung (1), insbesondere für die Luftumverteilung im Innenraum eines Bauwerks (30), umfassend eine Vielzahl von zu belüftenden Bereichen (31), wobei die Vorrichtung (1) mindestens einen Behälter (2) umfasst, umfassend mindestens zwei Lufteingänge (3, 4) und zwei Luftausgangsmündungen (5), wobei die Lufteingänge (3, 4) dazu ausgelegt sind, der eine (3), bezeichnet als Außenlufteingang (3), mit Luft, entnommen von außerhalb des Bauwerks (30), der andere (4) oder ein anderer, bezeichnet als Innenlufteingang (4), mit Luft, entnommen von innerhalb des Bauwerks (30), versorgt zu werden, wobei die Luftausgangsmündungen (5) jeweils mit Hilfe einer Hülle (32) mit einem Bereich (31) verbunden werden können, der belüftet werden soll, wobei der Behälter (2) in mindestens zwei Kammern (7, 8) unterteilt ist, die im Inneren des Behälters (2) nicht kommunizieren, wobei die Kammern (7; 8) jeweils mit mindestens zwei Luftausgängen (9, 10) ausgestattet sind, und wobei die eine (7), bezeichnet als erste Kammer (7), mit dem Außenlufteingang (3), die andere (8), bezeichnet als zweite Kammer (8), mit dem Innenlufteingang (4) des Behälters (2) versehen ist, **dadurch gekennzeichnet, dass** bei mindestens bestimmen der Luftausgänge (9; 10) der ersten und zweiten Kammer (7, 8) einer der Luftausgänge (9) der ersten Kammer (7) und einer der Luftausgänge (10) der zweiten Kammer (8) in einer gleichen Luftausgangsmündung (5) des Behälters angebracht sind, wobei diese Luftausgänge einer gleichen Luftausgangsmündung jeweils mit einem Verschlussorgan (111, 121) versehen sind, wobei die Verschlussorgane (111, 121) unabhängig voneinander verschoben werden können und jeweils mit einem Steuerorgan (112, 122) zur Versetzung des Verschlussorgans (111, 121) in Verschiebung zur Verschiebung des Verschlussorgans (111, 121) zwischen einer offenen Position und einer geschlossenen Position ausgestattet sind.

2. Luftumverteilungsvorrichtung (1) nach Anspruch 1, **dadurch gekennzeichnet, dass** das Verschlussorgan (111, 121) mindestens eines der Luftausgänge (9, 10) eine Drosselklappe ist und das Steuerorgan (112, 122) zur Versetzung in Verschiebung des Verschlussorgans (111, 121) ein Motor ist.

3. Luftumverteilungsvorrichtung (1) nach einem der Ansprüche 1 oder 2, **dadurch gekennzeichnet, dass** es mindestens, vorzugsweise mindestens zwei Generatoren (13) eines Luftstroms wie z. B. einen Ventilator umfasst,

4. Luftumverteilungsvorrichtung (1) nach Anspruch 3, **dadurch gekennzeichnet, dass** der oder mindestens der eine der Generatoren (13) von Luftstrom in einer der Kammern (7, 8) des Gehäuses (2) angeordnet ist.

5. Luftumverteilungsvorrichtung (1) nach einem der Ansprüche 3 oder 4, **dadurch gekennzeichnet, dass** der oder mindestens der eine der Generatoren (13) von Luftstrom in der ersten Kammer (7) des Behälters (2) angeordnet ist, wobei diese erste Kammer (7) auch mindestens einen Filter (14) enthält, der zwischen dem Außenlufteingang (3) und dem Generator (13) von Luftstrom der Kammer (7) angeordnet ist.

6. Luftumverteilungsvorrichtung (1) nach einem der Ansprüche 3 bis 5, **dadurch gekennzeichnet, dass** der oder der mindestens eine der Generatoren (13) von Luftstrom in der zweiten Kammer (8) des Behälters (3) angeordnet ist, die auch mindestens einen Teil eines Systems (15) zur Erwärmung und/oder zur Abkühlung von Luft aufnimmt, wobei sich dieser mindestens eine Teil des Systems (15) zur Erwärmung und/oder zur Abkühlung zwischen dem Generator (13) von Luftstrom und den Luftausgängen (10) der Kammer (8) befindet.

7. Luftumverteilungsvorrichtung (1) nach einem der Ansprüche 3 bis 6, **dadurch gekennzeichnet, dass** die Luftumverteilungsvorrichtung (7) mindestens ein Gehäuse (16) umfasst, das mit mindestens einem Lufteingang (17) und einem Luftausgang (18) ausgestattet ist, und dadurch, dass der oder der mindestens eine der Generatoren (13) von Luftstrom in dem Gehäuse (16) angeordnet ist, und dadurch, dass der Luftausgang (18) des Gehäuses (16) mit einem der Lufteingänge (3, 4) des Behälters (2) verbunden werden kann.

8. Luftumverteilungsvorrichtung (1) nach einem der Ansprüche 1 bis 7, **dadurch gekennzeichnet, dass** sich mindestens eine der Luftausgangsmündungen (5) an der Außenseite vorspringend von der Wand (24) des Behälters (2) erstreckt, um einen Leitungsabschnitt (19) zu bilden.

9. Luftumverteilungsvorrichtung (1) nach einem der Ansprüche 1 bis 8, **dadurch gekennzeichnet, dass** sie eine Führungseinheit (20) umfasst, die konfiguriert ist, um mindestens die Steuerorgane (112, 122) zur Versetzung der Verschlussorgane (111, 121) in Verschiebung der Luftausgänge (9, 10) der ersten und zweiten Kammer (7, 8) zu führen.

10. Luftumverteilungsvorrichtung (1) nach Anspruch 9, **dadurch gekennzeichnet, dass** sie Mittel (21) zur Lieferung eines Dateneingangs an die Führungseinheit (20) umfasst, und dadurch, dass die Führungseinheit (20) konfiguriert ist, um mindestens die Steuerorgane (112, 122) zur Versetzung der Verschlussorgane (111, 121) in Verschiebung der Luftausgänge (9, 10) der ersten und zweiten Kammer (7, 8) je nach den Daten zu führen.

11. Luftumverteilungsvorrichtung (1) nach Anspruch 10, **dadurch gekennzeichnet, dass** die Mittel (21) zur Lieferung eines Dateneingangs an die Führungseinheit (20) mindestens einen Temperatursensor (211) und einen Luftqualitätssensor (214) umfassen, und dadurch, dass die Führungseinheit (20) konfiguriert ist, um, auf der Ebene einer gleichen Luftausgangsmündung (5) des Behälters, das Steuerorgan (112) zur Versetzung des Verschlussorgans (111) in Verschiebung des Luftausgangs (9) der ersten Kammer (7) mindestens in Funktion der Daten zu führen, die vom Luftqualitätssensor (214) und das Steuerorgan (122) zur Versetzung in Verschiebung des Verschlussorgans (121) des Luftausgangs (10) der zweiten Kammer (8) mindestens in Funktion der Daten zu führen, die vom Temperatursensor (211) geliefert werden.

12. Luftumverteilungsvorrichtung (1) nach einem der Ansprüche 1 bis 11, **dadurch gekennzeichnet, dass** mindestens einer der Lufteingänge (3, 4) des Behälters (2) mit einem Verschlussorgan (22) und einem Steuerorgan (23) zur Verschiebung des Verschlussorgans (22) zwischen einer geschlossenen Position und einer offenen Position ausgestattet ist.

## Claims

1. An air distribution device (1), in particular for distributing air in the interior space of a building (30) including multiple zones (31) to be ventilated, said device (1) comprising at least one box (2) comprising at least two air inlets (3, 4) and two air outlet mouths (5), one (3) of said air inlets (3, 4), called exterior air inlet (3), being able to be supplied with air taken from outside the building (30), the other (4) or another, called interior air inlet (4), being able to be supplied with air taken from inside the building (30), and said air outlet mouths (5) each being able to be connected by means of a sheath (32) to a zone (31) to be ventilated, where the box (2) is divided into at least two non-communicating chambers (7, 8) inside said box (2), said chambers (7; 8) each being equipped with at least two air outlets (9; 10) and one (7), called first chamber (7), being provided with the exterior air inlet (3), the other (8), called second chamber (8), being provided with the interior air inlet (4) of the box (2),
**characterized in that** for at least some of the air outlets (9; 10) of the first and second chambers (7; 8), one of the air outlets (9) of the first chamber (7) and one of the air outlets (10) of the second chamber (8) are arranged in a same air outlet mouth (5) of the box, these air outlets of a same air outlet mouth each being provided with a closing member (111, 121), said closing members (111,121) moving independently and each being equipped with a member (112, 122) for controlling the driving of the movement of said closing member (111, 121) in order to move said closing member (111, 121) between an open position and a closed position.

2. The air distribution device (1) according to claim 1, **characterized in that** the member (111, 121) for closing at least one of the air outlets (9, 10) is a butterfly valve, and the member (112, 122) for controlling the driving of the movement of said closing member (111, 121) is a motor.

3. The air distribution device (1) according to one of claims 1 or 2, **characterized in that** it comprises at least, preferably at least two generators (13) of an air flow, such as a fan.

4. The air distribution device (1) according to claim 3, **characterized in that** the or at least one of the air flow generators (13) is positioned in one of the chambers (7, 8) of the box (2).

5. The air distribution device (1) according to one of claims 3 or 4, **characterized in that** the or at least one of the air flow generators (13) is positioned in the first chamber (7) of the box (3), this first chamber (7) also containing at least one filter (14) positioned between the exterior air inlet (3) and the air flow generator (13) of said chamber (7).

6. The air distribution device (1) according to one of claims 3 to 5, **characterized in that** the or at least one of the air flow generators (13) is positioned in the second chamber (8) of the box (3), which also houses at least part of an air heating and/or cooling system (15), this at least one part of the heating and/or cooling system (15) being situated between the air flow generator (13) and the air outlets (10) of said chamber (8).

7. The air distribution device (1) according to one of claims 3 to 6, **characterized in that** the air distribution device (7) comprises at least one housing (16) equipped with at least one air inlet (17) and one air outlet (18), **in that** the or at least one of the air flow generators (13) is positioned in said housing (16) and **in that** the air outlet (18) of the housing (16) can be connected to one of the air inlets (3, 4) of the box (2).

8. The air distribution device (1) according to one of claims 1 to 7, **characterized in that** at least one of the air outlet mouths (5) extends outwardly protruding from the wall (24) of the box (2) to form a duct segment (19).

9. The air distribution device (1) according to one of claims 1 to 8, **characterized in that** it comprises a steering unit (20) configured to steer at least the members (112, 122) for controlling the driving of the movement of the closing members (111, 121) for the air outlets (9, 10) of the first and second chambers (7, 8).

10. The air distribution device (1) according to claim 9, **characterized in that** it comprises means (21) for supplying input data to said steering unit (20), and **in that** the steering unit (20) is configured to steer at least the members (112, 122) for controlling driving of the movement of the closing members (111, 121) for the air outlets (9, 10) of the first and second chambers (7, 8) as a function of said data.

11. The air distribution device (1) according to claim 10, **characterized in that** the means (21) for supplying input data to said steering unit (20) comprise at least a temperature sensor (211) and an air quality sensor (214) and **in that** the steering unit (20) is configured to, at a same air outlet mouth (5) of the box, steer the member (112) for controlling driving of the movement of the closing member (111) of the air outlet (9) of the first chamber (7) at least as a function of the data supplied by the air quality sensor (214) and the member (122) for controlling driving of the movement of the closing member (121) of the air outlet (10) of the second chamber (8) at least as a function of the data supplied by the temperature sensor (211).

12. The air distribution device (1) according to one of claims 1 to 11, **characterized in that** at least one of the air inlets (3, 4) of the box (2) is equipped with a closing member (22) and a member (23) for controlling the movement of said closing member (22) between a closed position and an open position.
